# EUROPEAN PATENT SPECIFICATION

(11) **EP 3 743 970 B1**
(45) Date of publication and mention of the grant of the patent: **29.05.2024**
(21) Application number: 19704046.2
(22) Date of filing: 14.01.2019
(51) Int. Cl.: H02G 3/14

(54) **COMPOSITE COVER PLATE FOR THE WALL MOUNTING OF MODULAR ELECTRICAL APPARATUSES**
VERBUNDDECKPLATTE ZUR WANDMONTAGE VON MODULAREN ELEKTRISCHEN GERÄTEN
PLAQUE DE RECOUVREMENT COMPOSITE POUR LE MONTAGE MURAL D'APPAREILS ÉLECTRIQUES MODULAIRES

(30) Priority: 25.01.2018 IT 201800001848
(43) Date of publication of application: 02.12.2020
(73) Proprietor: BTICINO S.P.A., 21100 Varese (VA) (IT)
(72) Inventor: BROGIOLI, Marco, I-21100 Varese (IT); ROCERETO, Pietro, I-21100 Varese (IT)
(74) Representative: Carangelo, Pierluigi
(86) International application number: PCT/IB2019/050257
(87) International publication number: WO 2019/145815

(56) References cited:
- EP-A1- 3 059 825
- WO-A1-2006/117817
- WO-A1-2011/092067
- CN-U- 206 674 393
- GB-A- 2 490 784
- US-A1- 2010 133 000
- US-A1- 2010 155 099
- US-A1- 2017 288 350
- Sauter: "EY-RU 241", , 31 December 2016 (2016-12-31), XP055583230, Retrieved from the Internet: URL:https://www.sauter.se/uploads/tx_cabag pdm/926532.pdf [retrieved on 2019-04-25]
- Sauter: "EY-RU241", , 10 November 2016 (2016-11-10), XP055583231, Retrieved from the Internet: URL:https://www.sauter.se/uploads/tx_cabag pdm/939183.pdf [retrieved on 2019-04-25]
- Sauter: "EY-RU 210", , 31 December 2016 (2016-12-31), XP055805712, Retrieved from the Internet: URL:https://www.sauter-controls.com/wp-con tent/uploads/2019/02/926548.pdf [retrieved on 2021-05-19]

## Description

The present invention relates to the technical field of devices for wall-mounting modular electrical apparatuses and, more in particular, relates to a composite cover plate for the wall-mounting of modular electrical apparatuses.

For the purposes of the present description, modular electrical apparatus indicates, in general, any electrical means or device generally belonging to electrical installations in residential buildings and the like and which is usually intended to be mounted on, e.g. embedded in, walls of such buildings by the side of other modular electrical apparatuses.

Therefore, this definition includes, but is not limited to, switches, power sockets, data network sockets, TV sockets, telephone sockets, pushbuttons, changeover switches, multiway switches, control electrical devices in general, connectors, thermostats, timers, fuse holders, ringers/buzzers, emergency lights, e.g. removable, signaling lights, e.g. step markers, displays, e.g. LCDs, and the like.

As known, the modular electrical apparatuses mentioned above are usually installed on a wall forming composite mounting structures or groups of parts, often named "light points" and generally including:
- a plurality of modular electrical apparatuses;
- a flush-box intended to be embedded in the installation wall;
- a supporting frame fixable to the flush-box and adapted to support the plurality of modular electrical apparatuses arranged mutually side-by-side; and
- a cover plate fixable to the supporting frame.

The known cover plates can be in one piece or may comprise multiple pieces which are or can be assembled to one another. In the latter case, the cover plate is a composite cover plate.

In the light points indicated above, the cover plate is used both to ensure a minimum protection for electrical apparatuses, e.g. from dust, and to prevent dangerous access (e.g. by means of sharp objects) to the electrically conductive parts of electrical apparatuses. Another important task of the cover plate is to mask flaws produced, for example, by the presence of a cavity in the wall and by the presence of the flush-box and of the supporting frame which, rather than having appearance value, have a functional value difficult to reconcile with requirements or principles of appearance.

In the light points indicated above, due to imperfections in the wall installation and/or due to imperfections in the fixing of the flush-box in the installation wall and/or due to possible misalignments in the fixing of the supporting frame to the flush-box, there may be a misalignment between the cover plate and the installation wall. For example, due to such misalignment, a part of the outer peripheral edge of the cover plate may be in contact with the installation wall, while a remaining part may not, thereby determining the presence of an empty space, generally of a slot or gap, visible between the cover plate and the installation wall. Such empty space, which can reach a width of the order of one millimeter, is a problem both from the appearance point of view, because it gives the impression of imperfect mounting, and from a functional point of view, because it constitutes a point of infiltration and accumulation of dust, dirt and germs. These drawbacks occur both when the installation wall is a masonry wall and when the installation wall is a plasterboard wall.

The present invention aims at offering a solution which can either overcome or reduce at least in part the drawbacks of the cover plates and of the light points of the prior art described above. US 2010/0155099 A1 and US 2017/0288350 A1 disclose prior art composite cover plates.

Such object is achieved by means of a composite cover plate, as defined in the appended claim 1 in its most general form and in the dependent claims in several particular embodiments.

The invention will be better understood from the following detailed description of a preferred embodiment, made by way of non-limiting example with reference to the accompanying drawings, in which:
- figure 1 shows an axonometric view with separate parts of an embodiment of an assembly of parts comprising a composite cover plate for wall-mounting modular electrical apparatuses, wherein the cover plate includes a plurality of first and second cover elements, wherein one of the first cover elements is shown tilted with respect to the remaining ones in figure 1, wherein the cover plate further comprises a compensation frame;
- figure 2 is an axonometric view of the cover plate in figure 1,
- figure 3 shows a front elevation view of the cover plate in figure 1;
- figure 4 shows an axonometric view of a variant embodiment of the cover plate in figures 1-3;
- figure 5 shows a front elevation plan view of the cover plate in figures 1-3 from which two cover elements were removed to make the base body of the cover plate partially visible and from which the compensation plate was also removed;
- figure 6 shows a bottom plan view of the cover plate in figures 2-3 in the configuration in figure 5;
- figure 7 shows a bottom plan view of the base body of the cover plate in figure 1, comprising two mounting cross pieces and two connecting uprights;
- figure 8 shows a front elevation plan view of the base body of the cover plate in figure 1;
- figure 9 shows an axonometric view of an embodiment of one of the second cover elements which can be coupled to a connecting upright of figure 8;
- figure 10 shows an axonometric view of one of the first cover elements which can be coupled to the mounting cross pieces;
- figure 11 shows an axonometric view of another embodiment of one of the first cover elements which can be coupled to the mounting cross pieces;
- figure 12 shows a rear elevation plan view of the cover plate in figure 1 from which the first cover elements and the compensating frame were removed;
- figure 13 shows a flat rear elevation view of the base body of figure 8 to which the compensating frame was added;
- figure 14 shows an axonometric view of the compensating frame which shows the face of the compensating frame intended to be directed towards the installation wall, i.e. the face opposite to the face directed towards the base body;
- figure 15 shows a plan front elevation view of the compensating frame in figure 14, which shows the face of the compensating frame intended to be directed towards the installation wall;
- figure 16 shows a perspective view of a further variant embodiment of the cover plate in figure 1.

Similar or equivalent elements in the figures are indicated by the same reference numerals.

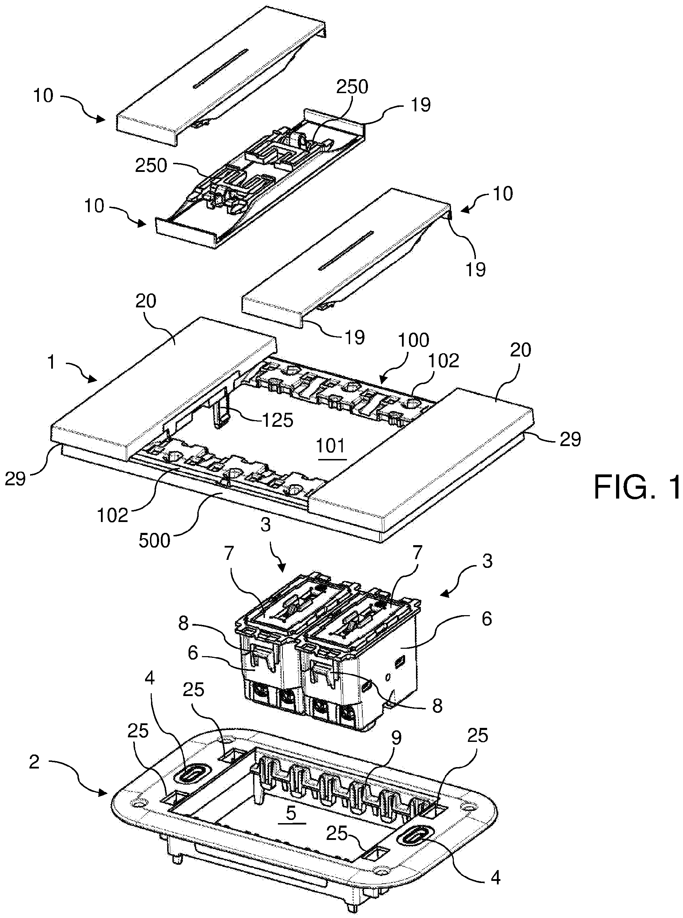

Figure 1 shows a group of parts for wall-mounting modular electrical apparatuses 3, e.g. such as modular switches 3 of a residential electrical installation, e.g. of a domestic electrical system. In the present description, the aforesaid group of parts can also be indicated with the expression "light point".

The light point comprises a supporting frame 2 intended to be fixed, in the example by means of a pair of screws which can be inserted into respective through holes 4, to an installation wall or to an electrical fush-box which can be embedded in the wall, not shown in the figures.

The supporting frame 2 has a frame-shaped base body, comprising the four frame sides in mutually parallel and opposite in pairs, preferably made of electrically insulating material, e.g. hard plastic. Two of the aforesaid opposite frame sides are provided with lock and snap fixing elements 9 to allow the fixing of the modular electrical apparatuses 3 provided with conjoined lock and snap fixing elements 8.

The supporting frame 2 comprises a mounting window 5 in which one or more modular electrical apparatuses 3 can be fixed. Preferably, the modular electrical apparatuses 3 can be fixed to the supporting frame 2 by means of the aforesaid conjoined lock and snap fixing elements 8. In the non-limiting example in figure 1, the modular electrical apparatuses 3 are three electrical pushbutton switches. Each one comprises a casing 6 and a pushbutton 7, e.g. constrained to the casing 6 so as to be able to slide axially with respect to the casing 6. The casing 6 encloses the electromechanical electrical switching members inside. The casing 6 preferably comprises the aforesaid conjoined lock and snap fixing elements 8, which are adapted to engage with the fixing elements 9 of the supporting frame 2. Preferably, the aforesaid conjoined lock and snap fixing elements 8 are provided on two opposite outer faces of the casing 6, only one of which is shown in figure 1. A non-limiting example of lock and snap fixing system between modular electrical apparatuses and a supporting frame is described in patent publication WO2006123379 A1.

It is worth noting that there is no restriction regarding the number and type of modular electrical apparatuses 3 which can be fixed to the supporting frame 2 with the exception of possible limitations imposed by modularity of the supporting frame 2.

As explained above, in general, the definition of modular electrical apparatus includes, but is not limited to, switches, power sockets, data network sockets, USB sockets, TV sockets, telephone sockets, pushbuttons, changeover switches, multiway switches, control electrical devices in general, connectors, thermostats, timers, fuse holders, ringers/buzzers, emergency lights, e.g. removable, signaling lights, e.g. step markers, displays, e.g. LCDs, and the like.

The supporting frame 2 comprises a plurality of seats or fixing channels 25, preferably defined in the frame-shaped base body so as to allow fixing a composite cover plate 1 to the supporting frame 2. Preferably, the seats or fixing channels 25 are four in number and arranged at the vertices of a quadrilateral.

The group of parts further comprises a composite cover plate 1 adapted and configured to be fixed to the supporting frame 2, preferably in removable manner.

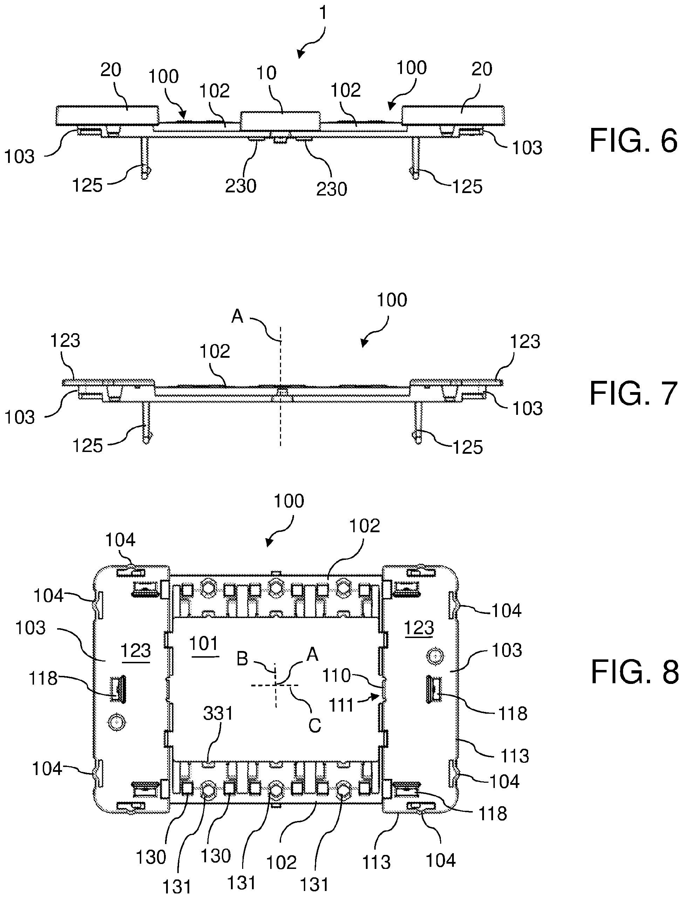

The cover plate 1 comprises a frame-shaped base body 100, shown in greater detail in figures 7 and 8, which extends about a through opening 101 having an opening axis A.

The cover plate 1 further comprises:
- a compensating frame 500, which surrounds the base body 100;
- an elastic system 501 operatively interposed between the compensating frame 500 and the base body 100 adapted and configured to allow the compensating frame 500 to float with respect to the base body 100.

Advantageous, non-limiting embodiments of the cover plate 1 will be described below before describing the compensating frame 500 and the elastic system 501 in greater detail, it being understood that the teachings of the present invention, with particular reference to the compensating frame 500 and to the associated elastic system 501, are also applicable to cover plates different from the ones described below, e.g. also to cover plates as described in general in patent application WO2006/106555 A1.

The cover plate 1 preferably comprises a plurality of fixing teeth 125, four fixing teeth in the example, which protrude from the base body 100 towards the supporting frame 2, each of which is adapted to engage in a respective housing or fixing channel 25, preferably in removable manner. It is therefore apparent that the base body 100 comprises fixing means 125 adapted and configured to allow the fixing of the cover plate 1 to the supporting frame 2 for the modular electrical apparatuses 3. A non-limiting example of fixing system between a cover plate and a supporting frame is described in European patent publication EP1867026 E1.

The base body 100 comprises two cross pieces 102 arranged on opposite sides with respect to the through opening 101, two connecting uprights 103 mutually arranged on opposite sides with respect to the through opening 101 which connect the two cross pieces 102 to each other. The cross pieces 102 will be named mounting cross pieces 102 hereinafter without because of this introducing any limitation. For example, the base body 100 is made of plastic material, e.g. by molding. Preferably, the base body 100 forms a single piece.

According to a preferred embodiment, the base body 100 comprises a base which surrounds the opening 101 which extends transversely with respect to the opening axis between an inner peripheral edge 150 which delimits the opening 101 and an outer peripheral edge 151 opposite to the inner peripheral edge 150. In the installation configuration, this base is directed towards the supporting frame 2.

According to an advantageous, non-limiting embodiment, the cover plate 1 comprises a plurality of first cover elements 10,11,12 arranged mutually side-by-side between the connecting uprights 103 to cover all or part of the through opening 101. Preferably, each of the first cover elements 10,11,12 can be associated with a respective modular electrical apparatus 3. For example, with reference to figure 1, each of the first three cover elements 10 can be associated with a respective modular electrical apparatus 3, although only two modular electrical apparatuses 3 are shown in figure 1. For the purposes of the present description, the term "can be associated" means that it can be placed into a functional relationship, e.g. to achieve a functional mechanical and/or electrical interaction, or into a positional relationship, e.g. in an alignment relationship, with a respective modular electrical apparatus 3.

The cover plate 1 preferably comprises coupling elements 230 adapted to mechanically couple the first cover elements 10,11,12 to the mounting cross pieces 102 of the base body 100.

Advantageously, in the cover plate 1, the first cover elements 10,11,12 are superimposed on the mounting cross pieces 102 to cover the mounting crosspieces 102 of the frame-shaped base body 100 in addition to through opening 101. Preferably, the first cover elements 10,11,12 frontally cover the mounting cross pieces 102 in their entirety.

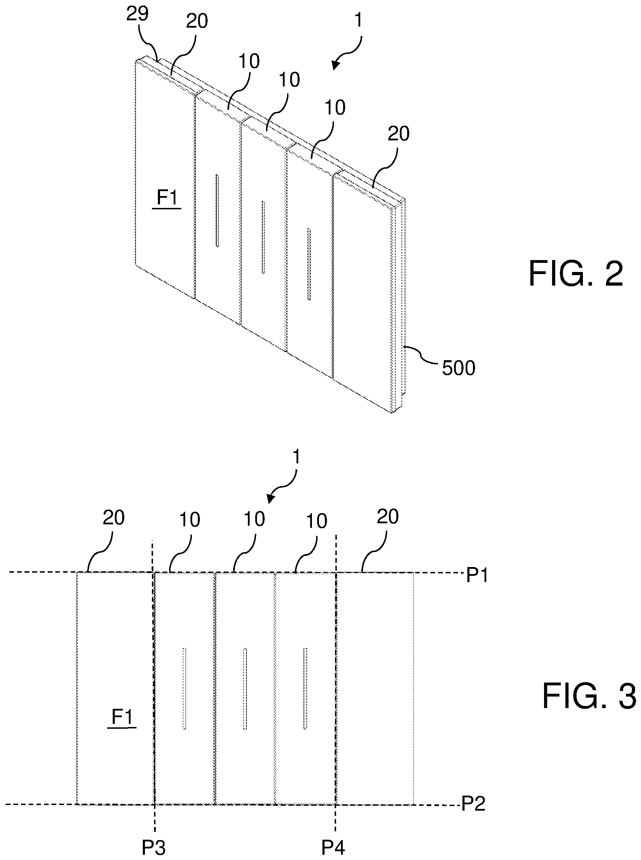

Preferably, the plurality of the first cover elements 10,11,12 defines an array of cover elements having a flat front surface, such as for example the flat front face F1 shown in figures 2 and 3. More preferably, the aforesaid array of cover elements has at least one pair of opposite flat side faces, such as, for example, the opposite faces arranged along the planes P1 and P2 in figure 3 perpendicular to the front face. For example, the aforesaid array of cover elements has two pairs of flat opposite side faces. In figure 3, one of such pairs is formed by the opposite faces arranged along the planes P1 and P2 perpendicular to the front face F1 and the other pair is formed by the opposite faces arranged along the planes P3 and P4 perpendicular to the front face.

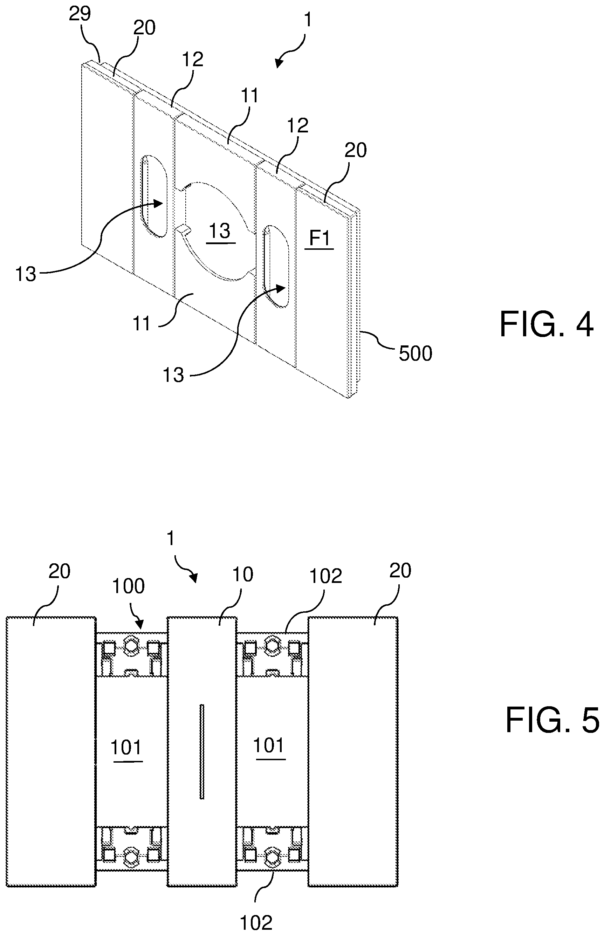

With reference to figure 5, according to an advantageous embodiment, the cover plate 1 comprises at least one first cover element 10 which extends between the mounting cross pieces 102 transversely to the mounting cross pieces 102 over the through opening 101. If such cover element 10 does not include any through window, it may be a simple plug (or a false terminal) or may be an actuation button of a switch, for example. Figure 4 shows an alternative embodiment of first cover elements 12 which comprise a through window 13 defined in the thickness of the cover element 12, in order to make the covering of a modular electrical apparatus, which is a socket, e.g. an electrical network socket.

With reference to figure 4, the first cover elements 11 may be split in two separate parts, each of which can be coupled to a respective mounting cross piece 102, defining a through window 13 between the two parts, in order to make the cover of a modular electrical apparatus, which is a socket, e.g. a Shuko electrical socket. It is therefore apparent that, for the purposes of the present description, the word "element" when used in the expression "cover element" also contemplates the embodiment of an element which is a "cover assembly", i.e. a functional entity which includes several cover pieces which are physically separated from one another.

Without dwelling further on the possible types of first cover elements 10, 11, 12 of the cover plate 1, it is worth noting that such types may comprise continuous plates, as shown in figures 2 and 3, for making plugs or actuating buttons for modular electrical devices 3 or may be perforated or split plates, as shown for example in figure 4.

According to an advantageous, non-limiting embodiment, the cover plate 1 further comprises a plurality of second cover elements 20 comprising a second cover element 20 fixed to one of the connecting uprights 103 and a further second cover 20 fixed to the other connecting upright 103, each of the second cover elements 20 being such as to cover a respective connecting upright 103.

According to an advantageous embodiment, the first cover elements 10,11,12 are interposed between the second cover elements 20. Preferably, the plurality of the first cover elements 10,11,12 defines, together with the plurality of second cover elements 20, an array of cover elements having a flat front surface F1, such as for example the main face F1 shown in figures 2 and 3. Said flat front face F1 is one of the two main faces of the cover plate 1.

According to an advantageous embodiment, the second cover elements 20 are fixed to the respective connecting uprights 103 by means of fixing elements, which in an advantageous non-limiting embodiment are lock and snap fixing elements. With reference to figure 8, according to an advantageous embodiment, the lock and snap fixing elements comprise elastically deformable elements 104 arranged on one or more peripheral, preferably outer, edges 113 of the connecting uprights 103. Such elastically deformable elements 104 are preferably made in a single piece with the connecting uprights 103, e.g. by injection molding. Preferably, the elastically deformable elements 104 are wave-shaped bars or bridges and have a rounded central portion and two rectilinear opposite end portions.

In accordance with an embodiment, the connecting uprights 103 each comprise a fixing plate 123 to which a respective second cover element 20 is fixed. According to an advantageous embodiment, as shown in figure 7, the mounting cross pieces 102 are in retracted position with respect to the fixing plates 123. For example, the mounting cross pieces 102 are part of the base of the base body 100, while the fixing plates 123 are fixed to such base so that they protrude with respect to the mounting cross pieces 102, preferably both parallel to the opening axis A and transversely with respect to said axis A.

According to an advantageous embodiment, the elastically deformable elements 104 are arranged on such fixing plates 123. Preferably, the fixing plates 123 comprise a portion protruding laterally with respect to a remaining portion of the connecting upright 103. More preferably, the elastically deformable elements 104 are arranged on such protruding portion.

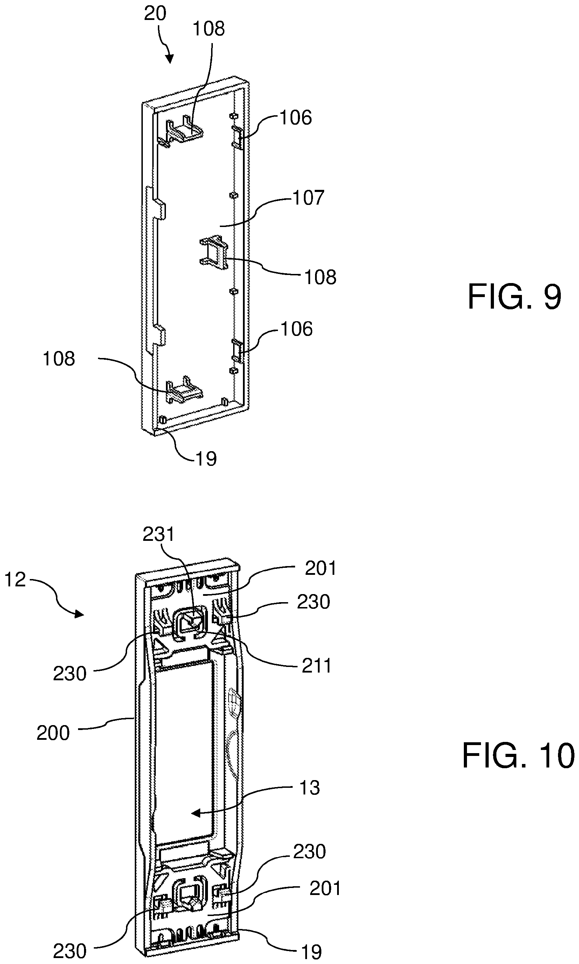

The elastically deformable elements 104 are adapted and configured to engage with seats 106 (shown in figure 9) or projections 114 present on one face 107 of the second cover elements 20 facing towards the associated connecting upright 103. Said face 107 in practice is the rear face of the second cover elements 20.

Figure 9 shows an example of a second cover element 20 which can be conveniently made of plastic, e.g. ABS, which comprises one or more seats 106, in the number of two in figure 9, in which respective elastically deformable elements 104 are engaged. In this example, the second cover element 20 further comprises one or more coupling teeth 108, which are three in figure 9, which project from the rear face 107 of the second cover element 20 to engage into respective seats or coupling openings 118 defined in the thickness of the connecting upright 103, more specifically defined in the thickness of the fixing plates 123. Some advantageous embodiments of the first cover elements 10, 11, 12 will now be described in greater detail.

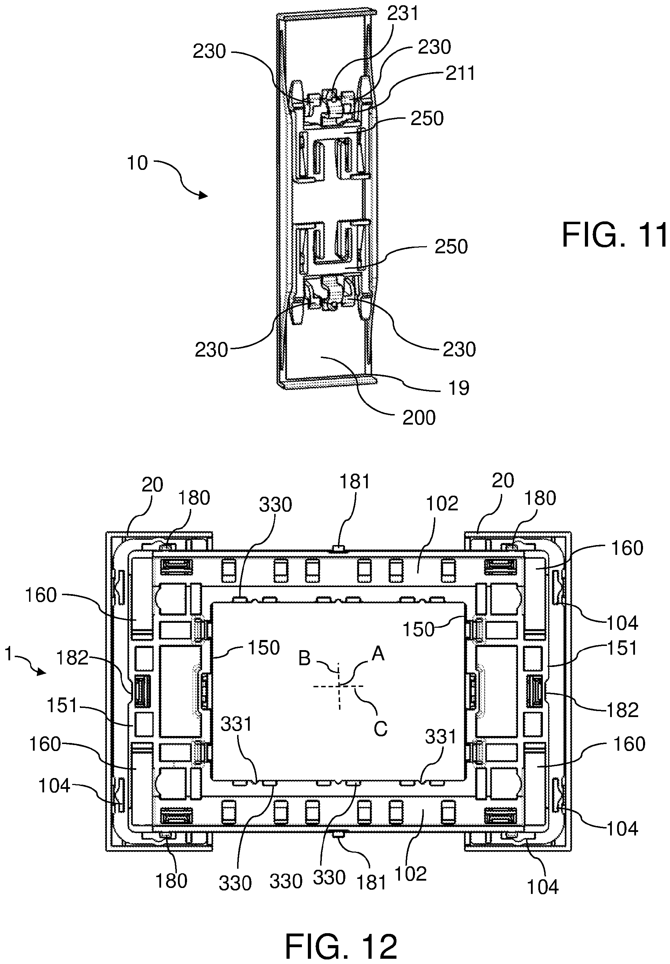

Now making non-limiting reference for the sake of simplicity to the first cover element 12 shown in figure 10, which shows a cover element of a modular apparatus which is an electrical socket, the first cover element 12 comprises a plate-shaped body 200 and coupling elements 230 fixed to the plate-shaped body 200, adapted and configured to mechanically couple the cover element 12 to the cover plate 1, and in particular to the base body 100, and more in particular to the mounting cross pieces 102. In accordance with an embodiment, the coupling elements 230 allow constraining the plate-shaped body 200 of the first cover element 12 to the cover plate 1, so that the plate-shaped body 200 can move with respect to the mounting cross pieces 102 between two opposite end of stroke positions, in one of which the plate-shaped body 200 is relatively closer to the mounting cross pieces 102 and in the other of which the plate-shaped body 200 is relatively further from the mounting cross pieces 102. For example, the aforesaid coupling elements 230 comprise snap-coupling teeth, which are four in figure 10, which once inserted in the respective engagement seats 330 defined in a mounting cross piece 102 (shown in figure 12) allow the first cover element 12 to translate by a given stroke with respect to the cover plate 1, in particular with respect to the base body 100 and more in particular with respect to the mounting cross piece 102.

Advantageously, the first cover element 12 comprises alignment means 211, 231 adapted to be operatively interposed between the first cover element 12 and the cover plate 1, and in particular the base body 100 and more in particular a mounting cross piece 102, to maintain, in the absence of external forces, the plate-shaped body 200 in the end of stroke position, in which it is relatively further away from the cover plate 1, and in particular from the base body 100, and more in particular from the mounting cross piece 102. Preferably, such alignment means 211, 231 comprise at least one elastic element 211 operatively interposed between the plate-shaped body 200 and the base body 100 and in particular the mounting cross piece 102.

Preferably, the alignment means 211, 231 allow obtaining an alignment between the plate-shaped body 200 and the base body 100 (and in particular the mounting cross piece 102) along three mutually perpendicular axes. For example, in order to obtain a three-axial alignment, the alignment means 211, 231 comprise an elastic element 211 adapted to apply a thrust force along an axis and comprise a centering tooth 231 on which the aforesaid elastic element 211 acts and which is wedge-shaped on a transverse plane, e.g. perpendicular, to said axis. In the example, the centering tooth 231 engages into a recess 131 with at least in part counter-shaped section provided on the mounting cross piece 102.

According to an advantageous embodiment, the first cover device 12 comprises a support device 201 of the aforesaid coupling elements 230 and of the aforesaid alignment means 211, 231 which can be or is coupled, either reversibly or irreversibly, to the plate-shaped body 200, e.g. by means of a lock and snap coupling.

As can be seen in figure 10, the first cover element 12 comprises two of the aforesaid mutually opposite support devices 201, each designed to couple the plate-shaped body 200 to a respective mounting cross piece 102.

With reference to figures 11, a further embodiment of a first cover element 10 will now be described which in this case performs the function of a manual actuation button of a modular electrical apparatus 3, such as for example a modular pushbutton switch.

The first cover element 10 comprises a plate-shaped body 200 and coupling elements 230 fixed to the plate-shaped body 200, adapted and configured to mechanically couple the first cover element 12 to the cover plate 1, in particular to the base body 100 and more in particular to the assembly crosspieces 102. According to an embodiment, such coupling elements 230 allow constraining the plate-shaped body 200 of the first cover element 10 to the cover plate 1, in particular to the base body 100 and more in particular to the mounting cross pieces 102, so that the plate-shaped body 200 can move with respect to the mounting cross pieces 102 preferably between two opposite end of stroke positions, in one of which the plate-shaped body 200 is relatively closer to the mounting cross pieces 102 and in the other of which the plate-shaped body 200 is relatively farther from the mounting cross pieces 102. For example, the aforesaid coupling elements 230 comprise snap-coupling teeth which once inserted inside the through hole 101 and that once having crossed the inner edges of the mounting cross pieces 102 passing beyond a snapping position engage with such inner edges, in the respective engagement seats 330 defined in the mounting cross pieces 102, in which said snap-coupling teeth can slide but from which they cannot be pulled out unless forcibly or intentionally in order to prevent an accidental detachment of the cover element 10 from the mounting cross pieces 102.

In the example in figures 11, the cover element 10 comprises at least one pressure transmission member 250 operatively coupled to the plate body 200 in order to transmit a pressure force applied to the plate-shaped body 200 to the modular electrical apparatus 3.

According to a possible embodiment, the first cover element 10 is coupled to the mounting cross pieces 102 so as to be able to translate with respect to the base body 100. According to a further possible embodiment, the first cover element 10 is coupled to the mounting cross pieces 102 so as to be able to rotate with respect to the base body 100. However, in a further particularly advantageous embodiment, the first cover element 10 is coupled to the mounting cross pieces 102 so as to be able to translate and rotate with respect to the base body 100. In the example in figures 11, the coupling elements 230 and the pressure transmission member 250 form a coupling system which allows the first cover element 10 to translate and rotate with respect to the base body 100.

According to a particularly advantageous embodiment, also the first cover element 10 in figures 11 comprises alignment means 211, 231 adapted to be operatively interposed between the first cover element 10 and the cover plate 1, and in particular the base body 100 and more in particular the mounting cross piece 102, to maintain in the absence of external forces the plate-shaped body 200 in the end of stroke position in which it is relatively further away from the cover plate 1 and in particular from the base body 100 and more in particular from the mounting crosspiece 102. Preferably, the alignment means 211, 231 comprise at least one elastic element 211 operatively interposed between the plate-shaped body 200 and the base body 100 and in particular the mounting cross piece 102. In the example, such elastic element 211 is fixed to the pressure transmission member 250 and is preferably made in a single piece therewith.

Preferably, the alignment means 211, 231 allow obtaining an alignment between the plate-shaped body 200 and the base body 100 (and in particular the mounting cross piece 102) along three mutually perpendicular axes. For example, in order to obtain a three-axial alignment, such alignment means 211, 231 comprise an elastic element 211 adapted to apply a thrust force along an axis and comprising a centering tooth 231 on which the aforesaid elastic element 211 acts and which is wedge-shaped on a transverse plane, e.g. perpendicular, to said axis. In the example, the centering tooth 231 engages into a recess 331 with an at least partially counter-shaped profile provided on the mounting cross piece 102. The elastic element 211 preferably performs an elastic suspension function for the plate-shaped body 200 of the cover element 10. Preferably, the centering tooth 231 is fixed to the elastic element 211 and more preferably forms a single piece with the latter. The pressure transmission member 250 in this case also acts as a support device for the aforesaid alignment means 211, 231. Again in this case, the aforesaid support device is connectable or coupled, either reversibly or irreversibly, to the plate-shaped body 200.

As explained above, the cover plate 1 comprises:
- a compensating frame 500, which surrounds the base body 100;
- an elastic system 501 operatively interposed between the compensating frame 500 and the base body 100 adapted and configured to allow the compensating frame 500 to float with respect to the base body 100.

By virtue of the provision of the compensating frame 500 and of the associated elastic system 501, since said elastic system 501 makes the compensating frame 500 float (i.e. movable relative to the base body 100), when the cover plate 1 is fixed to an installation wall the compensating frame 500 is such as to be able to move with respect to the cover plate 1 and in particular with respect to the base body 100 and the associated cover elements 10,11,12,20, in order to take a position such as to cover any unwanted gaps which due to the imperfections described above with reference to the cover plates of the prior art can be defined between the cover plate 1 and the installation wall, i.e. to compensate for the effects of undesired misalignments between the cover plate and the installation wall.

According to the invention, the compensating frame 500 surrounds the outer peripheral edge 151 of the base of the base body 100 and floats with respect to such base.

In a possible example, without because of this introducing any limitation, the aforesaid compensating frame 500 is a quadrangular frame, e.g. square or rectangular, having four sides 510, 511, 512, 513 mutually parallel in pairs.

According to an advantageous embodiment, the outer compensating frame 500 is made in one piece, e.g. of electrically insulating material, preferably plastic.

According to an advantageous embodiment, the elastic system 501 allows the compensating frame 500 to float with respect to two axes B, C perpendicular to each other and perpendicular to the opening axis A of the opening 101 of the base body 100. Advantageously, the aforesaid elastic system 501 also allows the compensating frame 500 to translate along the opening axis A.

It is advantageous to provide an embodiment in which the elastic system 501 comprises a plurality of elastic elements fixed to the compensating frame 500 and projecting from the compensating frame 500 towards the base body 100. In this manner, the elastic system 501 is fixed to the compensating frame 500. It is also especially advantageous to provide that the aforesaid elastic elements are integrated in the compensating frame 500, so that the compensating frame 500 and the elastic system 501 can form a structure which can be made in a single piece, e.g. by molding of a plastic material.

According to a preferred embodiment, each of the elastic elements of the elastic system 501 is a plate-shaped element, e.g. a plate-like wing.

Preferably, the aforesaid elastic elements of the elastic system 501 have a first end portion 502 fixed to the compensating frame 500 and an opposite end portion 503, which is a free end portion.

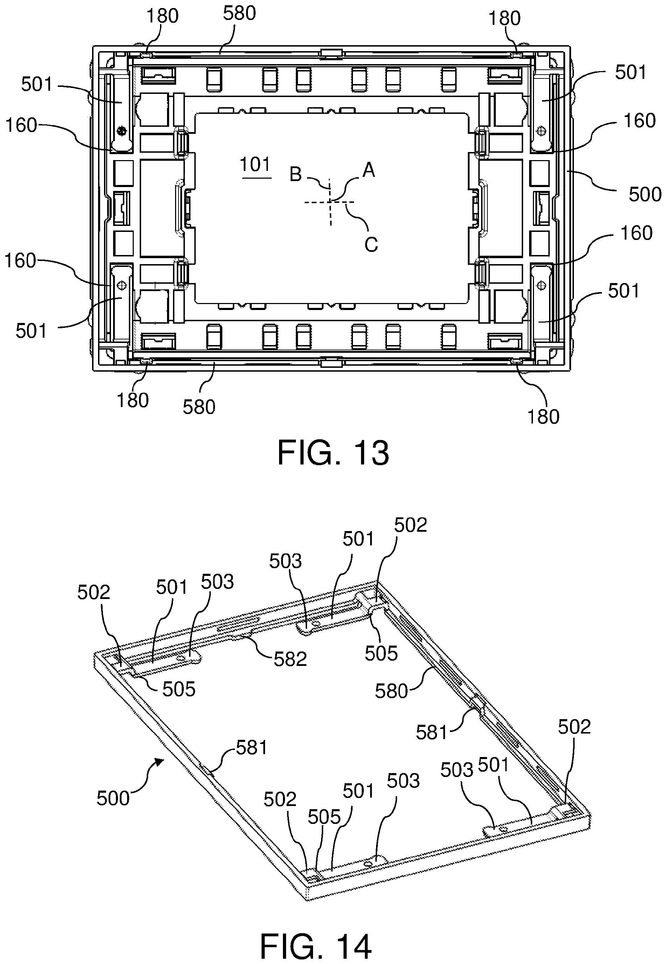

The base body 100 of the cover plate 1 along the opening axis A has a front face, visible in figure 8, and a rear face, visible in figures 12 and 13, and the elastic system 501 is adapted and configured to react on the rear face of the base body 100 to push the compensating frame 500 in a direction away from said rear face. In other words, the elastic system 501 is adapted and configured to push the compensating frame 500 towards the installation wall. In the example shown in the figures, the free end portion 503 of the elastic elements of the elastic system 501 so as to react in abutment against the aforesaid rear face of the base body 100. In accordance with an embodiment which has the advantage of reducing the thickness of the cover plate 1 along the opening axis A, the aforementioned rear face of the base body 100 has seats 160, such as for example recesses adapted to receive, in whole or in part, the elastic elements of the elastic system 501.

According to a particularly advantageous embodiment, the cover plate 1 further comprises a first end of stroke system 180, 580 adapted and configured to establish an end of stroke position between the base body 100 and the compensating frame 500 in a direction away from said components 100, 500. Such system is adapted and configured to prevent the compensating frame under the bias of the elastic system 501 from moving away from the base body 100 beyond a given limit, which corresponds to the end of stroke position in the distancing direction. This advantageously allows constraining the compensating frame 500 to the base body 100, while allowing the compensating frame 500 to float. In the particular example shown, the aforesaid end of stroke system comprises a plurality of teeth 180 projecting from the base body 100 which in the end of stroke position in the distancing direction abut against inner projecting peripheral edges 580 of the compensating frame 500. In the particular example shown in the figures, said inner projecting peripheral edges 580 are arranged on the two opposite sides 511,513 of the compensating frame 500. For such purpose, according to an advantageous embodiment, the compensating frame 500 comprises two opposite sides 511,513 which have an L-shaped cross section.

Similarly, either in addition or alternatively to the first end of stroke system 180, 580 described above, the cover plate 1 may comprise a further end of stroke system 181, 182, 581, 582 acting in opposite direction to the first end of stroke system, i.e. adapted and configured to establish an end of stroke position between the base body 100 and the compensating frame 500 in the approaching direction between said components 100, 500. In the particular example shown in the figures, such a further end of stroke system 180, 580 comprises a plurality of recesses and projections distributed on the inner peripheral edge of the compensating frame 500 and on the outer peripheral edge 151 of the base of the base body 100.

With reference to Figure 14, according to a particularly advantageous embodiment, between the first end portion 502 and the opposite end portion 503 of the elastic elements, said elastic elements have a part 505 having a curve or a step or an inclined plane, so that the first end portion 502 and the opposite end portion 503 are mutually and axially spaced apart along a direction parallel to the opening axis A. Figure 14 shows the face of the compensating frame 500 intended to face towards the installation wall, i.e. the face of the compensating frame 500 opposite to the face which is directed towards the base body 100.

In a further advantageous, non-limiting embodiment, the aforesaid elastic system comprises strengthening elements 504, e.g. connecting bars 504, or similarly connecting plates, adapted and configured to strengthen the fixing of the first end portions 502 of the elastic elements to the compensating frame 500. This expedient has the advantage of reducing the risk of such first end portions 502 from fracturing and/or cracking due to excessive stresses.

In accordance with a particularly advantageous embodiment, the aforesaid elastic elements of the elastic system 501 are adapted and configured to be interposed and clamped between the base body 100 of the cover plate 1 and the supporting frame 2 so that the end portions 503 are substantially in a fixed position with respect to the base body 100 and the compensating frame 500 can float with respect to this in order to be able to take a position in the installation configuration in which this compensates for any misalignment between the cover plate 1 and the installation wall.

According to an embodiment, the cover plate 1 may have a front face F1, i.e. on the face arranged on the opposite side with respect to the compensating frame 500, which projects transversely with respect to the opening axis to protrude beyond the compensating frame 500. In such a manner, an undercut 29 is defined between the compensating frame 500 and the front face of the cover plate 1. In particular, if the cover plate 1 comprises a plurality of cover elements 10,11,12,20 fixed to the base body 100, such undercut 29 is defined between said cover elements 10,11,12,20 and the compensating frame 500. It is also advantageous to provide that the cover elements 10,11,12,20 have peripheral edges 19 which protrude towards the compensating frame 500 parallel to the opening axis A, so as to mask any axial gaps (i.e. defined in parallel to the opening axis A) present between the compensating frame 500 and the cover elements 10,11,12,20.

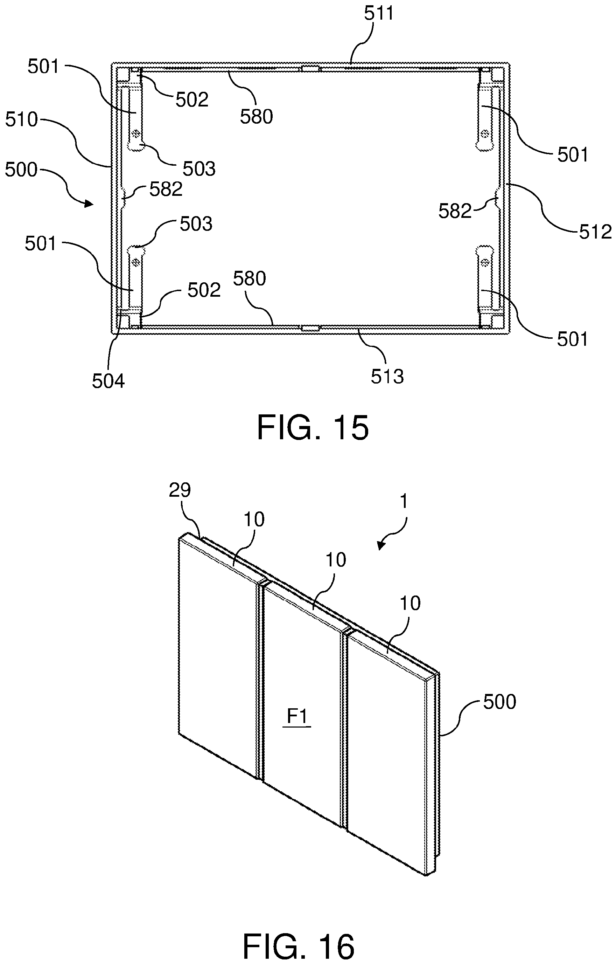

Figure 16 shows a further alternative embodiment of a cover plate 1 in which the first cover element 10 in addition to covering the through opening 101 and the mounting cross pieces 102 are also such as to cover the connecting uprights 103, thus either entirely or nearly entirely cover an entire face of the base body 100 of the cover plate 1. In other words, in such embodiment, no second cover elements distinct from the first cover elements 10 are provided.

It is finally worth noting that, although first cover elements 10,11,12 substantially having covering or mechanical actuation functions, the first cover elements 10, 11, 12 may also have electronic components fitted onboard adapted to control the associated modular electrical apparatus 3 and/or to communicate data with them. The first cover elements 10,11,12 may further comprise sensors and/or electronic displaying devices.

From the description above, it is apparent that a cover plate of the type described above can achieve the predetermined objects allowing solving both the problems of appearance and of function described above with reference to the cover plates of the prior art.

Obviously, a person skilled in art may make further changes and variants to the cover plate and to the group of parts described above all without departing from the scope of protection of the invention, as defined in the following claims.

## Claims

1. A composite cover plate (1) for wall-mounting modular electrical apparatuses (3), comprising:
- a base body (100) shaped as a frame, which extends around a through opening (101) having an opening axis (A), wherein the base body (100) along the opening axis (A) has a front face and a rear face;
- a compensating frame (500), which surrounds the base body (100);
- an elastic system (501) operatively interposed between the compensating frame (500) and the base body (100) **characterized in that** the elastic system is adapted and configured to allow the compensating frame (500) to float with respect to the base body (100), and **in that** the elastic system (501) is adapted and configured to react on said rear face to push said compensating frame (500) in a distancing direction away from said rear face and towards an installation wall of the cover plate (1).

2. A composite cover plate (1) according to claim 1, wherein the elastic system (501) allows the compensating frame (500) to float with respect to two axes (B, C) perpendicular to each other and perpendicular to the opening axis (A).

3. A composite cover plate (1) according to claims 1 or 2, wherein the elastic system (501) comprises a plurality of elastic elements fixed to the compensating frame (500) and projecting from the compensating frame (500) towards the base body (100).

4. A composite cover plate (1) according to claim 3, wherein said elastic elements have a first end portion (502) fixed to the compensating frame (500) and an opposite end portion (502), which is a free end portion.

5. A composite cover plate (1) according to claim 4, wherein the elastic system (501) comprises strengthening elements (504) adapted and configured to strengthen the fastening of the first end portions (502) of the elastic elements to the compensating frame (500).

6. A composite cover plate (1) according to claim 4, wherein said opposite end portion (503) is such as to react in abutment against said rear face of the base body (100).

7. A composite cover plate (1) according to claim 4, wherein said elastic elements comprise a part (505) having a curve or a step or an inclined plane between the first end portion (502) and the opposite end portion (503) of the elastic elements.

8. A composite cover plate (1) according to claim 3, wherein said rear face of the base body (100) is provided with seats (160), such as recesses, adapted to receive, wholly or in part, the elastic elements of the elastic system (501).

9. A composite cover plate (1) according to any one of the preceding claims, comprising two mounting cross members (102) arranged on opposite sides with respect to the through opening (101), two connection uprights (103) arranged on opposite sides with respect to the through opening (101) and adapted to connect the two mounting cross members (102);
- a plurality of first cover elements (10,11,12) arranged side-by-side between the connection uprights (103) to cover, wholly or in part, the through opening (101), each cover element (10,11,12) being associable with a respective modular electrical apparatus (3);
- coupling elements (230) adapted to mechanically couple the first cover elements (10,11,12) to the mounting cross members (102);
- wherein the first cover elements (10,11,12) are superimposed on the mounting cross members (102) to cover the mounting cross members (102), as well as the through opening (101).

10. A composite cover plate (1) according to claim 9, further comprising a plurality of second cover elements (20) comprising a cover element (20) fixed to one of said connection uprights (103) and a further cover element (20) fixed to the other of said connection uprights (103), each of the second cover elements (20) being such as to cover a respective connection upright (103).

11. A composite cover plate (1) according to claim 10, wherein the first cover elements (10,11,12) are interposed between the second cover elements (20).

12. A composite cover plate (1) according to any one of the preceding claims from 9 to 11, wherein the first cover elements (10,11,12) comprise at least a first cover element (10,12), which extends between the mounting cross members (102) transversely to the mounting cross members (102) overlapping the through opening (101).

13. A composite cover plate (1) according to claim 9, wherein the first cover elements (10,11,12), as well as covering the through opening (101) and the mounting cross members (102) are also such as to cover the connection uprights (103).

14. A composite cover plate (1) according to any one of the preceding claims, wherein the base body (100) comprises fixing means (125) adapted and configured to fix the base body (100) to a supporting frame (2) of said modular electrical apparatuses (3).

15. A composite cover plate (1) according to claim 3, wherein said elastic elements are integrated in said compensating frame (500).

16. A group of parts for wall-mounting modular electrical apparatuses (3) comprising:
- a supporting frame (2) fixable to a wall having a frame body, which extends around a mounting window (5);
- a plurality of modular electrical apparatuses (3) installed side-by-side in the mounting window (5);
**characterized in that** the group of parts comprises a composite cover plate (1) according to any one of the preceding claims fixed to the supporting frame (2), and wherein the compensating frame (500) is operatively interposed between the base body (100) and the supporting frame (2).

## Patentansprüche

1. Verbunddeckplatte (1) zur Wandmontage modularer elektrischer Geräte (3), umfassend:
- einen Basiskörper (100) in Form eines Rahmens, der sich um eine Durchgangsöffnung (101) mit einer Öffnungsachse (A) erstreckt, wobei der Basiskörper (100) entlang der Öffnungsachse (A) eine vordere Fläche und eine hintere Fläche aufweist;
- einen Ausgleichsrahmen (500), der den Basiskörper (100) umgibt;
- ein elastisches System (501), das operativ zwischen dem Ausgleichsrahmen (500) und dem Basiskörper (100) angeordnet ist, **dadurch gekennzeichnet, dass** das elastische System geeignet und konfiguriert ist, es dem Ausgleichsrahmen (500) zu ermöglichen, in Bezug auf den Basiskörper (100) zu gleiten, und dass das elastische System (501) geeignet und konfiguriert ist, an der hinteren Fläche zu reagieren, um den Ausgleichsrahmen (500) in einer Abstandsrichtung von der hinteren Fläche weg und in Richtung einer Installationswand der Deckplatte (1) zu drücken.

2. Verbunddeckplatte (1) nach Anspruch 1, wobei das elastische System (501) es dem Ausgleichsrahmen (500) ermöglicht, in Bezug auf zwei zueinander senkrechte Achsen (B, C) und senkrecht zur Öffnungsachse (A) zu gleiten.

3. Verbunddeckplatte (1) nach Anspruch 1 oder 2, wobei das elastische System (501) eine Vielzahl von elastischen Elementen umfasst, die an dem Ausgleichsrahmen (500) befestigt ist und von dem Ausgleichrahmen (500) in Richtung des Basiskörpers (100) vorsteht.

4. Verbunddeckplatte (1) nach Anspruch 3, wobei die elastischen Elemente einen ersten, an dem Ausgleichsrahmen (500) befestigten Endabschnitt (502) und einen gegenüberliegenden Endabschnitt (502) aufweisen, der ein freier Endabschnitt ist.

5. Verbunddeckplatte (1) nach Anspruch 4, wobei das elastische System (501) Verstärkungselemente (504) umfasst, die geeignet und konfiguriert sind, die Befestigung des ersten Endabschnitts (502) der elastischen Elemente an dem Ausgleichsrahmen (500) zu verstärken.

6. Verbunddeckplatte (1) nach Anspruch 4, wobei der gegenüberliegende Endabschnitt (503) beschaffen ist, um gegen die hintere Fläche des Basiskörpers (100) zu stoßen.

7. Verbunddeckplatte (1) nach Anspruch 4, wobei die elastischen Elemente einen Teil (505) umfassen, der eine Kurve oder eine Stufe oder eine schräge Ebene zwischen dem ersten Endabschnitt (502) und dem gegenüberliegenden Endabschnitt (503) der elastischen Elemente aufweist.

8. Verbunddeckplatte (1) nach Anspruch 3, wobei die hintere Fläche des Basiskörpers (100) mit Sitzen (160), wie etwa Aussparungen, versehen ist, die geeignet sind, die elastischen Elemente des elastischen Systems (501) ganz oder teilweise aufzunehmen.

9. Verbunddeckplatte (1) nach einem der vorhergehenden Ansprüche, umfassend zwei Montagequerträger (102), die auf gegenüberliegenden Seiten in Bezug auf die Durchgangsöffnung (101) angeordnet sind, zwei Verbindungsholme (103), die auf gegenüberliegenden Seiten in Bezug auf die Durchgangsöffnung (101) angeordnet und geeignet sind, die beiden Montagequerträger (102) zu verbinden;
- eine Vielzahl von ersten Abdeckelementen (10, 11, 12), die nebeneinander zwischen den Verbindungsholmen (103) angeordnet ist, um die Durchgangsöffnung (101) ganz oder teilweise abzudecken, wobei jedes Abdeckelement (10, 11, 12) mit einem entsprechenden modularen elektrischen Gerät (3) verbindbar ist,
- Kopplungselemente (230), die geeignet sind, die ersten Abdeckelemente (10, 11, 12) mit den Montagequerträgern (102) mechanisch zu koppeln;
- wobei die ersten Abdeckelemente (10, 11, 12) auf die Montagequerträger (102) aufgesetzt sind, um die Montagequerträger (102) sowie die Durchgangsöffnung (101) abzudecken.

10. Verbunddeckplatte (1) nach Anspruch 9, ferner umfassend eine Vielzahl von zweiten Abdeckelementen (20), die ein Abdeckelement (20), das an einem der Verbindungsholme (103) befestigt ist, und ein weiteres Abdeckelement (20) umfasst, das an dem anderen der Verbindungsholme (103) befestigt ist, wobei jedes der zweiten Abdeckelemente (20) derart ist, dass es einen jeweiligen Verbindungsholm (103) abdeckt.

11. Verbunddeckplatte (1) nach Anspruch 10, wobei die ersten Abdeckelemente (10, 11, 12) zwischen den zweiten Abdeckelementen (20) angeordnet sind.

12. Verbunddeckplatte (1) nach einem der vorhergehenden Ansprüche 9 bis 11, wobei die ersten Abdeckelemente (10, 11, 12) mindestens ein erstes Abdeckelement (10, 12) umfassen, das sich zwischen den Montagequerträgern (102) quer zu den Montagequerträgern (102) erstreckt und die Durchgangsöffnung (101) überdeckt.

13. Verbunddeckplatte (1) nach Anspruch 9, wobei die ersten Abdeckelemente (10, 11, 12) nicht nur die Durchgangsöffnung (101) und die Montagequerträger (102) abdecken, sondern ebenfalls so beschaffen sind, dass sie die Verbindungsholme (103) abdecken.

14. Verbunddeckplatte (1) nach einem der vorhergehenden Ansprüche, wobei der Basiskörper (100) Befestigungsmittel (125) umfasst, die geeignet und konfiguriert sind, den Basiskörper (100) an einem Tragrahmen (2) der modularen elektrischen Geräte (3) zu befestigen.

15. Verbunddeckplatte (1) nach Anspruch 3, wobei die elastischen Elemente in den Ausgleichsrahmen (500) integriert sind.

16. Gruppe von Teilen zur Wandmontage modularer elektrischer Geräte (3), umfassend:
- einen Tragrahmen (2), der an einer Wand befestigt werden kann und einen Rahmenkörper aufweist, der sich um ein Montagefenster (5) erstreckt;
- eine Vielzahl von modularen elektrischen Geräten (3), die in dem Montagefenster (5) nebeneinander installiert ist;
**dadurch gekennzeichnet, dass** die Gruppe von Teilen eine Verbunddeckplatte (1) nach einem der vorhergehenden Ansprüche umfasst, die an dem Tragrahmen (2) befestigt ist, und wobei der Ausgleichsrahmen (500) operativ zwischen dem Basiskörper (100) und dem Tragrahmen (2) angeordnet ist.

## Revendications

1. Plaque de recouvrement composite (1) pour appareils électriques modulaires à montage mural (3), comprenant :
- un corps de base (100) en forme de cadre, lequel s'étend autour d'une ouverture traversante (101) comportant un axe d'ouverture (A), dans laquelle le corps de base (100) le long de l'axe d'ouverture (A) comporte une face avant et une face arrière ;
- un cadre de compensation (500), lequel entoure le corps de base (100) ;
- un système élastique (501) interposé de manière fonctionnelle entre le cadre de compensation (500) et le corps de base (100), **caractérisé en ce que** le système élastique est adapté et conçu pour permettre au cadre de compensation (500) de flotter par rapport au corps de base (100), et **en ce que** le système élastique (501) est adapté et conçu pour réagir à ladite face arrière pour pousser ledit cadre de compensation (500) dans une direction d'éloignement de ladite face arrière et vers une paroi d'installation de la plaque de recouvrement (1).

2. Plaque de recouvrement composite (1) selon la revendication 1, dans laquelle le système élastique (501) permet au cadre de compensation (500) de flotter par rapport à deux axes (B, C) perpendiculaires l'un par rapport à l'autre et perpendiculaires à l'axe d'ouverture (A).

3. Plaque de recouvrement composite (1) selon la revendication 1 ou 2, dans laquelle le système élastique (501) comprend une pluralité d'éléments élastiques fixés au cadre de compensation (500) et faisant saillie du cadre de compensation (500) vers le corps de base (100).

4. Plaque de recouvrement composite (1) selon la revendication 3, dans laquelle lesdits éléments élastiques comportent une première partie d'extrémité (502) fixée au cadre de compensation (500) et une partie d'extrémité (502) opposée, laquelle est une partie d'extrémité libre.

5. Plaque de recouvrement composite (1) selon la revendication 4, dans laquelle le système élastique (501) comprend des éléments de renforcement (504) adaptés et conçus pour renforcer la fixation des premières parties d'extrémité (502) des éléments élastiques au cadre de compensation (500).

6. Plaque de recouvrement composite (1) selon la revendication 4, dans laquelle ladite partie d'extrémité opposée (503) est telle qu'elle réagit en butée contre ladite face arrière du corps de base (100).

7. Plaque de recouvrement composite (1) selon la revendication 4, dans laquelle lesdits éléments élastiques comprennent une partie (505) comportant une courbe ou un pas ou un plan incliné entre la première partie d'extrémité (502) et la partie d'extrémité opposée (503) des éléments élastiques.

8. Plaque de recouvrement composite (1) selon la revendication 3, dans laquelle ladite face arrière du corps de base (100) est dotée de sièges (160), tels que des évidements, conçus pour recevoir, totalement ou partiellement, les éléments élastiques du système élastique (501).

9. Plaque de recouvrement composite (1) selon l'une quelconque des revendications précédentes, comprenant deux traverses de montage (102) agencées sur des côtés opposés par rapport à l'ouverture traversante (101), deux montants de liaison (103) agencés sur des côtés opposés par rapport à l'ouverture traversante (101) et conçus pour relier les deux traverses de montage (102) ;
- une pluralité de premiers éléments de recouvrement (10, 11, 12) agencés adjacents entre les montants de liaison (103) pour recouvrir, totalement ou partiellement, l'ouverture traversante (101), chaque élément de recouvrement (10, 11, 12) pouvant être associé à un appareil électrique modulaire (3) respectif ;
- des éléments d'accouplement (230) conçus pour accoupler mécaniquement les premiers éléments de recouvrement (10, 11, 12) aux traverses de montage (102) ;
- dans laquelle les premiers éléments de recouvrement (10, 11, 12) sont superposés sur les traverses de montage (102) pour recouvrir les traverses de montage (102), ainsi que l'ouverture traversante (101).

10. Plaque de recouvrement composite (1) selon la revendication 9, comprenant en outre une pluralité de seconds éléments de recouvrement (20) comprenant un élément de recouvrement (20) fixé à l'un desdits montants de liaison (103) et un autre élément de recouvrement (20) fixé à l'autre desdits montants de liaison (103), chacun des seconds éléments de recouvrement (20) étant tel qu'il recouvre un montant de liaison (103) respectif.

11. Plaque de recouvrement composite (1) selon la revendication 10, dans laquelle les premiers éléments de recouvrement (10, 11, 12) sont interposés entre les seconds éléments de recouvrement (20).

12. Plaque de recouvrement composite (1) selon l'une quelconque des revendications précédentes 9 à 11, dans laquelle les premiers éléments de recouvrement (10, 11, 12) comprennent au moins un premier élément de recouvrement (10, 12), lequel s'étend entre les traverses de montage (102) transversalement aux traverses de montage (102), chevauchant ainsi l'ouverture traversante (101).

13. Plaque de recouvrement composite (1) selon la revendication 9, dans laquelle les premiers éléments de recouvrement (10, 11, 12), ainsi que le recouvrement de l'ouverture traversante (101) et les traverses de montage (102), sont également tels qu'ils recouvrent les montants de liaison (103).

14. Plaque de recouvrement composite (1) selon l'une quelconque des revendications précédentes, dans laquelle le corps de base (100) comprend des moyens de fixation (125) adaptés et conçus pour fixer le corps de base (100) à un cadre de support (2) desdits appareils électriques modulaires (3).

15. Plaque de recouvrement composite (1) selon la revendication 3, dans laquelle lesdits éléments élastiques sont intégrés dans ledit cadre de compensation (500).

16. Groupe de pièces pour appareils électriques modulaires (3) à montage mural comprenant :
- un cadre de support (2) pouvant être fixé à un mur, comportant un corps en forme de cadre, lequel s'étend autour d'une fenêtre de montage (5) ;
- une pluralité d'appareils électriques modulaires (3) installés adjacents dans la fenêtre de montage (5) ;
**caractérisé en ce que** le groupe de pièces comprend une plaque de recouvrement composite (1) selon l'une quelconque des revendications précédentes fixée au cadre de support (2), et dans lequel le cadre de compensation (500) est interposé de manière fonctionnelle entre le corps de base (100) et le cadre de support (2).
